# EUROPEAN PATENT APPLICATION

(11) **EP 4 135 237 A1**
(43) Date of publication of application: **15.02.2023**
(21) Application number: 21783741.8
(22) Date of filing: 02.04.2021
(51) Int. Cl.: H04L 1/18, H04W 88/04

(54) **METHOD AND APPARATUS FOR CONFIGURING DRX ACTIVE STATE, USER EQUIPMENT, AND STORAGE MEDIUM**

(30) Priority: 07.04.2020 CN 202010266361
(71) Applicant: Spreadtrum Communications (Shanghai) Co., Ltd., Shanghai 201203 (CN)
(72) Inventor: LIU, Xing, Shanghai 201203 (CN)
(74) Representative: Maiwald GmbH
(86) International application number: PCT/CN2021/085240
(87) International publication number: WO 2021/204077

(57) **Abstract**

Embodiments of the preset application provide a method and apparatus for configuring a DRX active state, a user equipment, and a storage medium. The method comprises: configuring a user equipment to be in an active state within a valid time period, a starting time point of the valid time period being a time point at which the user equipment sends out or receives sidelink control information, or a time point within a period of time after the sidelink control information is sent out or received. According to the technical solution of the embodiments of the present application, the energy consumption of the user equipment can be effectively reduced, and low communication efficiency in scenes such as CSI reporting and blind retransmission can further be avoided.

## Description

### CROSS-REFERENCE TO RELATED APPLICATIONS

This application claims priority to Chinese Patent Application No. 202010266361.6, filed on April 7, 2020, and entitled "METHOD AND APPARATUS FOR CONFIGURING ACTIVE STATE of DRX, USER EQUIPMENT, AND STORAGE MEDIUM", the entire disclosure of which is incorporated herein by reference.

### TECHNICAL FIELD

The present disclosure generally relates to communication technology field, and more particularly, to a method and apparatus for configuring an active state of Discontinuous Reception (DRX), a User Equipment (UE), and a storage medium.

### BACKGROUND

In traditional wireless cellular communication, a communication link between a UE and a base station is called uplink or downlink, and a communication interface therebetween is called Uu interface.

Different from the traditional wireless cellular communication, in thing-to-thing direct communication (also known as sidelink communication), a UE communicates directly with another IE, a communication link therebetween is called a Sidelink (SL), and a communication interface therebetween is called PC5 interface.

During sidelink communication, UEs need to save power to reduce power consumption.

### SUMMARY

Embodiments of the present disclosure may reduce power consumption of UEs in sidelink communication.

In an embodiment of the present disclosure, a method for configuring an active state of DRX is provided, including: configuring at least one UE to be in the active state within a valid time, wherein a start time point of the valid time is a time point when the at least one UE sends or receives sidelink control information, or a time point within a period since the at least one UE sends or receives the sidelink control information.

Optionally, the period is within a range from longer than 0 to shorter than 20 milliseconds.

Optionally, the valid time is within a range from 1 to 20 milliseconds.

Optionally, the at least one UE includes a first UE and a second UE, and the method includes: configuring the first UE to be in the active state within the valid time since the first UE sends to the second UE the sidelink control information, wherein the valid time ends when the first UE receives channel state information from the second UE or at a specified time point until when the first UE has not received the channel state information.

Optionally, said the first UE receiving the channel state information sent by the second UE is determined based on the first UE receiving a report of the channel state information sent by the second UE, or a mapping relationship between the channel state information and the sidelink control information.

Optionally, said the first UE receiving a report of the channel state information sent by the second UE is determined based on indication information, or a report decoded from the channel state information, and the indication information is included in the sidelink control information sent by the second UE to the first UE.

Optionally, the at least one UE includes a first UE and a second UE, and the method includes: configuring the second UE to be in the active state within the valid period since the second UE receives the sidelink control information from the first UE, wherein the sidelink control information indicates the second user equipment not to send Hybrid Automatic Repeat reQuest (HARQ) feedback.

Optionally, an end time point of the valid time is a time point determined by Hybrid Automatic Repeat reQuest Round-Trip Timer (HARQ RTT) or an end time point of operation of a retransmission timer started by the second UE.

Optionally, a start time point of the valid time is a start time point of a time slot in which any reserved resource indicated by the sidelink control information is located, and an end time point of the valid time is an end time point of the time slot in which the any reserved resource is located.

Optionally, reserved resources indicated by the sidelink control information include a prior reserved resource and a later reserved resource, a start time point of the valid time is a start time point of a time slot in which the prior reserved resource is located, and an end time point of the valid time is an end time point of a time slot in which the later reserved resource is located.

In an embodiment of the present disclosure, a UE including a memory and a processor is provided, wherein the memory has computer instructions stored therein, and when the processor executes the computer instructions, the above method is performed.

In an embodiment of the present disclosure, a storage medium having computer instructions stored therein is provided, wherein when the computer instructions are executed, the above method is performed.

In an embodiment of the present disclosure, an apparatus for configuring an active state of DRX is provided, including: a configuring circuitry configured to configure at least one UE to be in the active state within a valid time, wherein a start time point of the valid time is a time point when the at least one UE sends or receives sidelink control information, or a time point within a period since the at least one UE sends or receives the sidelink control information.

Optionally, the period is within a range from longer than 0 to shorter than 20 milliseconds.

Optionally, the valid time is within a range from 1 to 20 milliseconds.

Optionally, the at least one UE includes a first UE and a second UE, and the configuring circuitry is configured to: configure the first UE to be in the active state within the valid time since the first UE sends to the second UE the sidelink control information, wherein the valid time ends when the first UE receives channel state information from the second UE or at a specified time point until when the first UE has not received the channel state information.

Optionally, said the first UE receiving the channel state information sent by the second UE is determined based on the first UE receiving a report of the channel state information sent by the second UE, or a mapping relationship between the channel state information and the sidelink control information.

Optionally, said the first UE receiving a report of the channel state information sent by the second UE is determined based on indication information, or a report decoded from the channel state information, and the indication information is included in the sidelink control information sent by the second UE to the first UE.

Optionally, the at least one UE includes a first UE and a second UE, and the configuring circuitry is configured to: configure the second UE to be in the active state within the valid period since the second UE receives the sidelink control information from the first UE, wherein the sidelink control information indicates the second user equipment not to send HARQ feedback.

Optionally, an end time point of the valid time is a time point determined by HARQ RTT or an end time point of operation of a retransmission timer started by the second UE.

Optionally, a start time point of the valid time is a start time point of a time slot in which any reserved resource indicated by the sidelink control information is located, and an end time point of the valid time is an end time point of the time slot in which the any reserved resource is located.

Optionally, reserved resources indicated by the sidelink control information include a prior reserved resource and a later reserved resource, a start time point of the valid time is a start time point of a time slot in which the prior reserved resource is located, and an end time point of the valid time is an end time point of a time slot in which the later reserved resource is located.

Embodiments of the present disclosure may provide following advantages. On one hand, DRX technology is introduced into sidelink communication, which may effectively reduce power consumption of UEs. On the other hand, configuring the active state of DRX may prevent lower communication efficiency in scenarios such as reporting and blind retransmission, for example, preventing a sending UE from being unable to detect Channel State Information (CSI) fed back by a receiving UE in time during CSI reporting, or preventing the receiving UE from being unable to timely detect Sidelink Control Information (SCI) sent by the sending UE for the first time during blind retransmission.

### BRIEF DESCRIPTION OF THE DRAWINGS

FIG. 1 is a flow chart of a method for configuring an active state of DRX according to an embodiment; and
FIG. 2 is a structural diagram of an apparatus for configuring an active state of DRX according to an embodiment.

### DETAILED DESCRIPTION

In ordinary wireless cellular communication, a UE usually uses a battery, and a DRX mechanism is introduced for prolonging a service time of the battery, avoiding frequent battery replacement or charging, and saving power. When the UE is configured with DRX, it only monitors control information, such as Downlink Control information (DCI) carried on a Physical Downlink Control Channel (PDCCH), from network equipment such as base stations in a specific condition or within a specific time period. The control information includes control information for scheduling uplink and downlink resources, and also includes, for example, control information for adjusting a transmission power of the UE. As the UE does not need to detect control information all the time, power consumption is reduced.

The power consumption of the UE also needs to be reduced during the sidelink communication.

In response to this problem, embodiments of the present disclosure introduce a DRX mechanism into the sidelink communication, that is, monitoring the control information from the sending UE only in a specific condition or within a specific time period, so that power consumption of the receiving UE is effectively reduced.

In various scenarios of the sidelink communication (including CSI reporting scenarios and blind retransmission scenarios), such as in transmission associated with SCI, a UE that is in a sleep state may be unable to receive information from another UE in time.

In response to this problem, embodiments of the present disclosure set a valid time associated with the SCI, which starts from a time point when a UE sends or receives the SCI, or a time point within a period since the UE sends or receives the SCI. The UE is in an active state within the valid time from the time point, so that in transmission associated with the SCI, the UE receives information sent by another UE in time.

In the scenario of CSI reporting, after acquiring CSI (CSI is a channel attribute of a wireless channel, which reflects communication quality of the channel), the sending UE may adjust parameters of resource allocation. Specifically, when being ready to send data to the receiving UE, the sending UE may request, by sending the SCI, the receiving UE to feed back information (i.e., CSI) of a reference measurement signal it receives to determine quality of a wireless channel in a direction from the sending UE to the receiving UE. The receiving UE may feed back CSI within a specified time, but if there is no timer running at the sending UE at this time and it is in a sleep state, the sending UE is unable to receive the CSI fed back by the receiving UE.

In response to specific issues in the CSI reporting scenario, in the embodiments of the present disclosure, the sending UE is configured to be in an active state within a valid time from a time point when the sending UE sends the SCI, or from a time point within a certain time period since the sending UE sends the SCI. As the sending UE is in the active state within the valid time, it can receive the CSI fed back by the receiving UE in time (e.g., within a specified time).

In the blind retransmission scenario, after feeding back Negative ACKnowledgement (NACK) information, the receiving UE may activate Hybrid Automatic Repeat reQuest Round-Trip Time (HARQ RTT timer), and activate a retransmission timer when the HARQ RTT timer times out to wait for retransmission of the sending UE. Sidelink communication supports resource reservation. For example, if the sending UE acquires 5 resources at a time, and a maximum number of resources configured by a higher layer is 3, a number of available resources is 3, where the first SCI indicates the first resource used for transmission this time, and the remaining 2 resources are reserved for retransmission or new transmission. When the resource for transmission this time and the reserved resources for subsequent transmission do not meet the HARQ RTT (not meeting HARQ RTT means that a time difference between the resource for transmission this time and the reserved resources for subsequent transmission is small, which is not enough for the sending UE to receive the HARQ feedback from the receiving UE and determine whether to retransmit according to the feedback which indicates success or failure of reception), the SCI sent by the sending UE may indicate that no HARQ feedback is required, and the blind retransmission that does not require HARQ feedback does not activate the HARQ RTT timer (and thus does not activate the retransmission timer when the HARQ RTT timer times out). However, if the receiving UE is in a sleep state at this time, it cannot receive the SCI sent by the sending UE on the reserved subsequent resources, such as the second SCI.

In response to specific issues in the blind retransmission scenario, in the embodiments of the present disclosure, the receiving UE is configured to be in an active state within a valid time from a time point when the receiving UE receives the SCI, or from a time point within a certain time period since the receiving UE receives the SCI. As the receiving UE is in the active state within the valid time, it can receive the SCI sent by the sending UE on the reserved subsequent resources in time.

The technical solutions of the embodiments of the present invention may be applied to 3G and 4G communication systems, and may also be applied to 5G systems and systems such as Public Land Mobile Network (PLMN) evolved in the future, where the 5G system includes two types of networking, namely Non-Standalone (NSA) and Standalone (SA).

In the embodiments of the present disclosure, the UE may be an access terminal, a subscriber unit, a subscriber station, a Mobile Station (MS), a remote station, a remote terminal, a mobile device, a user terminal, a terminal equipment, a wireless communication equipment, a user agent or a user device. The UE may also be a cellular phone, a cordless phone, a Session Initiation Protocol (SIP) phone, a Wireless Local Loop (WLL) station, a Personal Digital Assistant (PDA), a handheld device with wireless communication capabilities, a computing device or other processing devices connected to a wireless modem, an in-vehicle device, a wearable device, a UE in a future 5G network or a UE in a future evolved PLMN, which is not limited in the embodiments of the present disclosure.

In the embodiments of the present disclosure, the UE may include a sending UE and a receiving UE in sidelink communication. In interaction of sidelink communication, a UE may be both the sending UE and the receiving UE. However, in a specific transmission, equipment that sends the SCI is called the sending UE, and equipment that receives the SCI. is called the receiving UE.

In the embodiments of the present disclosure, descriptions such as "first" and "second" are only used for illustration and distinguishing description objects, but neither limiting an order, nor representing a special limitation on a number of devices, which does not constitute any limitation to the embodiments of the present disclosure.

In the embodiments of the present disclosure, "time slot" is a general term for time periods after a time is divided into the periodic time periods, and it may be a time slot, a frame, or a subframe, which is not limited in the embodiments of the present disclosure.

In order to clarify the objects, characteristics and advantages of the disclosure, embodiments of present disclosure will be described in detail in conjunction with accompanying drawings.

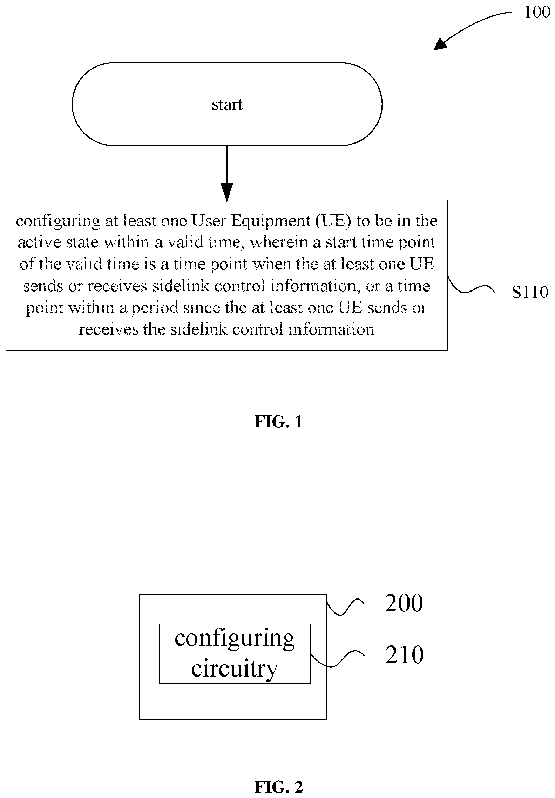

FIG. 1 is a flow chart of a method for configuring an active state of DRX according to an embodiment. Referring to FIG. 1, the method includes S110.

In S110, at least one UE is configured to be in the active state within a valid time, wherein a start time point of the valid time is a time point when the at least one UE sends or receives sidelink control information, or a time point within a period since the at least one UE sends or receives the sidelink control information.

The at least one UE includes a first UE and a second UE.

The SCI is associated with transmitted data of the UE, and the transmitted data may be CSI or application layer data.

Sidelink communication may involve transmission associated with the SCI. Maybe one UE is in a sleep state and unable to receive information sent by another UE in time.

As to this problem, in S110, the valid time associated with the SCI is set, which starts from a time point when a UE sends or receives the SCI, or a time point within a period since the UE sends or receives the SCI. The UE is in the active state within the valid time from the time point, so that in transmission associated with the SCI, the UE receives information sent by another UE in time.

The period is within a range from longer than 0 to shorter than 20 milliseconds.

The valid time may be within a range from 1 to 20 milliseconds.

Some embodiments of S110 are suitable for a CSI reporting scenarios.

In the CSI reporting scenario, after the first UE sends the SCI triggering CSI to the second UE, the second UE sends the CSI (including a CSI report) and the SCI scheduling the CSI to the first UE.

In the CSI reporting scenario, the valid time has a start time point and an end time point, and within the valid time, the first UE is in the active state. The start time point may be a time point when the first UE sends the SCI to the second UE, or a time point within a period since the first UE sends the SCI to the second UE, where the period is within the range from longer than 0 to shorter than 20 milliseconds. For example, the start time point may be 3ms after the SCI is sent, and the specific value may be set by a base station or specified by a protocol.

The end time point may be a specified time point until when the first UE has not received the channel state information. The specified time point may be set by a base station equipment in a connection with the first UE, or may be preconfigured by the first UE. The specified time point may be within the range from 3ms to 20ms.

Specifically, the first UE may determine that the CSI has not been received according to a mapping relationship between the CSI and the SCI received by the first UE from the second UE. The mapping relationship reflects a corresponding relationship between the CSI and the SCI requesting the CSI.

For example, the first UE may have sent two SCI to request CSI feedback. When the first UE receiving one CSI feedback, if it is determined, according to the mapping relationship, that the CSI corresponds to the second SCI, that is, the CSI does not correspond to the first SCI, the valid time corresponding to the first SCI is still from a time point when the first UE sends the first SCI (that is, the start time point) to a specified time point, that is, it is considered that the CSI corresponding to the first SCI has not been received.

For another example, the first UE may send two SCI for requesting CSI feedback. When the first UE receiving one CSI feedback, if it cannot be determined, according to the mapping relationship, which SCI corresponds to the second CSI, the valid time corresponding to the two SCI is still from a time point when the first UE sends the first SCI (that is, the start time point) to the specified time point, that is, it is considered that the CSI corresponding to the two SCI has not been received.

Alternatively, the end time point may be a time point when the first UE receives the CSI from the second UE. The first UE receiving the CSI from the second UE may be determined based on a mapping relationship between the CSI and the SCI, or based on the first UE receiving a report of CSI sent by the second UE.

Specifically, the first UE may determine that the CSI has been received according to the received mapping relationship between the CSI and the SCI sent by the second UE. The mapping relationship reflects the corresponding relationship between the CSI and the SCI requesting the CSI.

For example, the first UE may have sent two SCIs for requesting CSI feedback. When the first UE receives one CSI feedback, if it is determined, according to the mapping relationship, that the CSI corresponds to the first SCI, a period from a time point of the first UE sending the first SCI (i.e., the start time point) to a time point of the first UE receiving the CSI (i.e., the end time point) is determined as the valid time of the first SCI (for example, referred to as a first valid time). The first UE is in the active state within the first valid time. After the first valid time expires, the active state corresponding to the first SCI may be canceled. Similarly, independent of the determination of the first valid time, the valid time corresponding to the second SCI (for example, referred to as a second valid time) may be from a time point of the first UE sending the second SCI (i.e., the start time point) to a time point of the first UE receiving the CSI mapped with or corresponding to the second SCI (the end time point), and the first UE is in the active state during the second valid time.

Specifically, the first UE may determine that the CSI has been received based on a CSI report received from the second UE.

For example, the first UE may determine, based on indication information, that the CSI report sent by the second UE has been received. In some embodiments, after the first UE sends the SCI triggering CSI to the second UE, the second UE sends the CSI (including the CSI report) and the SCI for scheduling the CSI to the first UE, and the first UE can derive from the indication information of the SCI that schedules the CSI that the CSI report sent by the second UE has been received.

For another example, the first UE may decode a specific CSI report from the CSI to determine that the CSI report sent by the second UE has been received. In some embodiments, after the first UE sends the SCI triggering the CSI to the second UE, the second UE sends the CSI (including the CSI report) and the SCI for scheduling the CSI to the first UE, and the first UE may determine that the CSI report sent by the second UE has been received by decoding from the CSI a specific CSI report.

Some embodiments of S110 are suitable for a blind retransmission scenario.

In the blind retransmission scenario, when the first UE determines that resources for transmission this time and resources for subsequent transmission do not meet HARQ RTT, the first UE may send SCI which instructs the second UE not to send HARQ feedback. Accordingly, the first UE sends SCI not based on HARQ feedback (i.e., blind retransmission). Optionally, the SCI sent by the first UE is SCI indicating retransmission.

In the blind retransmission scenario, the valid time has a start time point and an end time point, and within the valid time, the second UE is in the active state. The start time point may be a time point within a period of time since the second UE receives the SCI from the first UE, where the period is within a range from longer than 0 to shorter than 20 milliseconds.

The end time point may be a time point determined by HARQ RTT, where HARQ RTT indicates a required minimum time length from initial transmission if retransmission is based on HARQ feedback. As the HARQ RTT is not met, the second UE does not send HARQ feedback (for example, not send NACK), and the first UE directly retransmits not based on the HARQ feedback. When the first UE sends an indication that SCI of HARQ feedback is not required, SCI may exist in following HARQ RTT time. Therefore, the end time point may be set to a time point determined by the HARQ RTT (that is, the time point after the time determined by the HARQ RTT).

Alternatively, the end time point may be an end time point determined by a retransmission timer. Specifically, when the receiving UE receives the SCI, the retransmission timer is started. Within the time determined by the retransmission timer, the receiving UE is in the active state, and at the end point of operation of of the retransmission timer, the receiving UE ends the active state and starts to enter a sleep state.

Alternatively, the end time point may be an end time point of a time slot in which a reserved resource indicated by the SCI is located. For example, the number of resources available to the sending UE is N (N is an integer greater than 1). The sending UE sends the first SCI which indicates end time points of time slots in which the subsequent (N-1) reserved resources are located respectively, and the end time points of the time slots in which the subsequent (N-1) reserved resources are located may be set as the end time points. A time point at which the second UE receives the first SCI from the first UE is recorded as the start time point. The end time points of the time slots in which the (N-1) reserved resources are located correspond to the (N-1) end time points, respectively. (N-1) valid times are obtained based on the start time point in combination with the (N-1) end time points.

In some embodiments, both the start time point and the end time point of the valid time may be time points corresponding to the reserved resources indicated by the SCI. For example, the sending UE has a number of available resources, the start time point may be a start time point of a time slot in which a prior reserved resource is located, and the end time point may be an end time of a time slot in which a later reserved resource is located. For another example, the sending UE has at least one available resource, the start time point may be a start time point of a time slot in which any reserved resource is located, and the end time point may be an end time point of a time slot in which any reserved resource is located.

In an embodiment of the present disclosure, a storage medium having computer instructions stored therein is provided, wherein when the computer instructions are executed, the above method as shown in FIG. 1 is performed.

In an embodiment of the present disclosure, a UE including a memory and a processor is provided, wherein the memory has computer instructions stored therein, and when the processor executes the computer instructions, the above method as shown in FIG. 1 is performed.

In the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a Read-Only Memory (ROM), a Programmable ROM (PROM), an Erasable PROM (EPROM), an electrically Erasable EPROM (EEPROM), or a flash memory. The volatile memory may be a Random Access Memory (RAM) which functions as an external cache. By way of example but not limitation, various forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchronous connection to DRAM (SLDRAM), and Direct Rambus RAM (DR-RAM).

FIG. 2 is a structural diagram of an apparatus 200 for configuring an active state of DRX according to an embodiment.

The apparatus 200 includes a configuring circuitry 210 configured to configure at least one UE to be in the active state within a valid time, wherein a start time point of the valid time is a time point when the at least one UE sends or receives sidelink control information, or a time point within a period since the at least one UE sends or receives the sidelink control information.

In some embodiments, the period is within a range from longer than 0 to shorter than 20 milliseconds.

In some embodiments, the valid time is within a range from 1 to 20 milliseconds.

In some embodiments, the at least one UE includes a first UE and a second UE, and the configuring circuitry 210 is configured to: configure the first UE to be in the active state within the valid time since the first UE sends to the second UE the sidelink control information, wherein the valid time ends when the first UE receives channel state information from the second UE or at a specified time point until when the first UE has not received the channel state information.

In some embodiments, said the first UE receiving the channel state information sent by the second UE is determined based on the first UE receiving a report of the channel state information sent by the second UE, or a mapping relationship between the channel state information and the sidelink control information.

In some embodiments, said the first UE receiving a report of the channel state information sent by the second UE is determined based on indication information, or a report decoded from the channel state information, and the indication information is included in the sidelink control information sent by the second UE to the first UE.

In some embodiments, the at least one UE includes a first UE and a second UE, and the configuring circuitry 210 is configured to: configure the second UE to be in the active state within the valid period since the second UE receives the sidelink control information from the first UE, wherein the sidelink control information indicates the second user equipment not to send HARQ feedback.

In some embodiments, an end time point of the valid time is a time point determined by HARQ RTT or an end time point of operation of a retransmission timer started by the second UE.

In some embodiments, a start time point of the valid time is a start time point of a time slot in which any reserved resource indicated by the sidelink control information is located, and an end time point of the valid time is an end time point of the time slot in which the any reserved resource is located.

In some embodiments, reserved resources indicated by the sidelink control information include a prior reserved resource and a later reserved resource, a start time point of the valid time is a start time point of a time slot in which the prior reserved resource is located, and an end time point of the valid time is an end time point of a time slot in which the later reserved resource is located.

Modules in the apparatus 200 and relationships therebetween may be referred to the description of the method 100 for configuring the active state of DRX in the embodiments of the present disclosure, which are not described in detail here.

The apparatus 200 may be, for example, a chip or a chip module.

The above device embodiments are merely illustrative, and for example, division of modules is merely one logical division, and other divisions may be realized in practice. The modules may be stored in a storage medium which includes several instructions for causing a computer device (a personal computer, a server or a network device) to execute some steps of the methods in the embodiments of the present disclosure. And the storage medium may be a medium for storing program codes, such as a U disk, a removable hard disk, a ROM, a RAM, a magnetic disk or an optical disk.

In some embodiments, modules/units included in each apparatus and product described in the above embodiments may be software modules/units, hardware modules/units, or a combination of software modules/units and hardware modules/units. For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A method for configuring an active state of Discontinuous Reception (DRX), **characterized by** comprising:
configuring at least one User Equipment (UE) to be in the active state within a valid time, wherein a start time point of the valid time is a time point when the at least one UE sends or receives sidelink control information, or a time point within a period since the at least one UE sends or receives the sidelink control information.

2. The method according to claim 1, **characterized in that** the period is within a range from longer than 0 to shorter than 20 milliseconds.

3. The method according to claim 1, **characterized in that** the valid time is within a range from 1 to 20 milliseconds.

4. The method according to claim 1, **characterized in that** the at least one UE comprises a first UE and a second UE, and the method comprises:
configuring the first UE to be in the active state within the valid time since the first UE sends to the second UE the sidelink control information, wherein the valid time ends when the first UE receives channel state information from the second UE or at a specified time point until when the first UE has not received the channel state information.

5. The method according to claim 4, **characterized in that** said the first UE receiving the channel state information sent by the second UE is determined based on the first UE receiving a report of the channel state information sent by the second UE, or a mapping relationship between the channel state information and the sidelink control information.

6. The method according to claim 5, **characterized in that** said the first UE receiving a report of the channel state information sent by the second UE is determined based on indication information, or a report decoded from the channel state information, and the indication information is included in the sidelink control information sent by the second UE to the first UE.

7. The method according to claim 1, **characterized in that** the at least one UE comprises a first UE and a second UE, and the method comprises:
configuring the second UE to be in the active state within the valid period since the second UE receives the sidelink control information from the first UE, wherein the sidelink control information indicates the second user equipment not to send Hybrid Automatic Repeat reQuest (HARQ) feedback.

8. The method according to claim 7, **characterized in that** an end time point of the valid time is a time point determined by Hybrid Automatic Repeat reQuest Round-Trip Timer (HARQ RTT) or an end time point of operation of a retransmission timer started by the second UE.

9. The method according to claim 7, **characterized in that** a start time point of the valid time is a start time point of a time slot in which any reserved resource indicated by the sidelink control information is located, and an end time point of the valid time is an end time point of the time slot in which the any reserved resource is located.

10. The method according to claim 7, **characterized in that** reserved resources indicated by the sidelink control information comprise a prior reserved resource and a later reserved resource, a start time point of the valid time is a start time point of a time slot in which the prior reserved resource is located, and an end time point of the valid time is an end time point of a time slot in which the later reserved resource is located.

11. A User Equipment (UE) comprising a memory and a processor, **characterized in that** the memory has computer instructions stored therein, and when the processor executes the computer instructions, the method of any one of claims 1 to 10 is performed.

12. A storage medium having computer instructions stored therein, **characterized in that** when the computer instructions are executed, the method of any one of claims 1 to 10 is performed.

13. An apparatus for configuring an active state of Discontinuous Reception (DRX), **characterized by** comprising:
a configuring circuitry configured to configure at least one User Equipment (UE) to be in the active state within a valid time,
wherein a start time point of the valid time is a time point when the at least one UE sends or receives sidelink control information, or a time point within a period since the at least one UE sends or receives the sidelink control information.

14. The apparatus according to claim 13, **characterized in that** the period is within a range from longer than 0 to shorter than 20 milliseconds.

15. The apparatus according to claim 13, **characterized in that** the valid time is within a range from 1 to 20 milliseconds.

16. The apparatus according to claim 13, **characterized in that** the at least one UE comprises a first UE and a second UE, and the configuring circuitry is configured to:
configure the first UE to be in the active state within the valid time since the first UE sends to the second UE the sidelink control information, wherein the valid time ends when the first UE receives channel state information from the second UE or at a specified time point until when the first UE has not received the channel state information.

17. The apparatus according to claim 16, **characterized in that** said the first UE receiving the channel state information sent by the second UE is determined based on the first UE receiving a report of the channel state information sent by the second UE, or a mapping relationship between the channel state information and the sidelink control information.

18. The apparatus according to claim 17, **characterized in that** said the first UE receiving a report of the channel state information sent by the second UE is determined based on indication information, or a report decoded from the channel state information, and the indication information is included in the sidelink control information sent by the second UE to the first UE.

19. The apparatus according to claim 13, **characterized in that** the at least one UE comprises a first UE and a second UE, and the configuring circuitry is configured to:
configure the second UE to be in the active state within the valid period since the second UE receives the sidelink control information from the first UE, wherein the sidelink control information indicates the second user equipment not to send Hybrid Automatic Repeat reQuest (HARQ) feedback.

20. The apparatus according to claim 19, **characterized in that** an end time point of the valid time is a time point determined by Hybrid Automatic Repeat reQuest Round-Trip Timer (HARQ RTT) or an end time point of operation of a retransmission timer started by the second UE.

21. The apparatus according to claim 19, **characterized in that** a start time point of the valid time is a start time point of a time slot in which any reserved resource indicated by the sidelink control information is located, and an end time point of the valid time is an end time point of the time slot in which the any reserved resource is located.

22. The apparatus according to claim 19, **characterized in that** reserved resources indicated by the sidelink control information comprise a prior reserved resource and a later reserved resource, a start time point of the valid time is a start time point of a time slot in which the prior reserved resource is located, and an end time point of the valid time is an end time point of a time slot in which the later reserved resource is located.
